(19) Europäisches Patentamt

European Patent Office

Office européen des brevets

(11) **EP 0 692 451 B1**

(12) **EUROPEAN PATENT SPECIFICATION**

(45) Date of publication and mention
of the grant of the patent:
**17.05.2000 Bulletin 2000/20**

(51) Int. Cl.[7]: **C01B 3/00**, C01B 3/40

(21) Application number: **94600005.6**

(22) Date of filing: **13.07.1994**

(54) **A stable and active nickel catalyst for carbon dioxide reforming of methane to synthesis gas**

Ein stabiler und aktiver Nickelkatalysator für die Kohlendioxydreformierung von Methan zum Synthesegas

Un catalyseur au nickel stable et actif pour le réformage au dioxyde de carbone de méthane pour obtenir du gaz de synthèse

(84) Designated Contracting States:
**AT BE CH DE DK ES FR GB GR IE IT LI NL PT SE**

(43) Date of publication of application:
**17.01.1996 Bulletin 1996/03**

(73) Proprietors:
• **Zhang, Zhaolong**
  **Xiamen 361005 (CN)**
• **Verykios, Xenophon E.**
  **Agios Basilios, Patras (GR)**

(72) Inventors:
• **Zhang, Zhaolong**
  **Xiamen 361005 (CN)**

• **Verykios, Xenophon E.**
  **Agios Basilios, Patras (GR)**

(74) Representative:
**Argyriadis, Korinna**
**Argyriadis - Metallinos - Schinas,**
**14, Sina Street**
**106 72 Athens (GR)**

(56) References cited:
**EP-A- 0 084 273**        **DE-A- 1 792 795**
**GB-A- 1 072 221**

• **CHEMICAL ABSTRACTS, vol. 118, no. 8, 22 February 1993, Columbus, Ohio, US; abstract no. 62544u, WU QIEYI ET AL & TIANRANQI HUAGONG, vol.16, no.4, 1991 pages 3 - 8**

## Description

The invention relates to a novel nickel-based catalyst with excellent stability and activity for carbon dioxide reforming of natural gas (methane) to synthesis gas.

This catalyst can be used in large-scale industrial conversion reactors of any type for the production of synthesis gas (CO and $H_2$) from natural gas or any other source of methane. It is well known that huge reservoirs of natural gas, consisting of primarily methane, exist. This raw material of very low value can be converted to valuable products over said catalyst, such as synthesis gas, which can subsequently be easily converted to other products such as gasoline, methanol, etc.

## Technical Field

This invention refers to a novel nickel-based catalyst which exhibits excellent activity and stability for carbon dioxide reforming of natural gas (methane) to synthesis gas. The catalyst consists of nickel crystallites in contact with $La_2O_3$ carrier or in the form of nickel supported on $La_2O_3$ carrier or in the form of nickel on $La_2O_3$ particles dispersed on a conventional carrier such as $\gamma$-$Al_2O_3$. The stable and active surface of $Ni/La_2O_3$ is formed, following two hours of the reaction of carbon dioxide reforming of methane at temperatures higher than 600°C. In contrast to conventional nickel-based catalysts, e.g. $Ni/\gamma$-$Al_2O_3$, the new $Ni/La_2O_3$ catalysts (at the stable state) are not prone to coking in the temperature range of 550-850°C, exhibiting excellent stability. Near complete conversion of methane and carbon dioxide, and around 100% selectivity to carbon monoxide and hydrogen are achieved over the $Ni/La_2O_3$ catalysts under stoichiometric conditions at temperatures in the neighbourhood of 8oo°C and a superficial contact time of ca. 0.02 seconds.

## Background of the Invention

Steam reforming of methane is used extensively in industry to form synthesis gas. However, the synthesis gas produced by steam reforming of methane has a hydrogen-to-carbon monoxide ratio of 3 which is undesirable for the Fischer-Tropsch synthesis network, since excess hydrogen suppresses chain growth and decreases selectivity to higher hydrocarbons [D.L.Trimm, Catal.Rev.Sci.Eng.16 (1977) 155]. Comparably, carbon dioxide reforming of methane is favourable since it produces a synthesis gas with a lower hydrogen-to carbon monoxide ratio. In addition, the carbon dioxide reforming of methane reaction has very important environmental implications because both methane and carbon dioxide are greenhouse gases which may be converted into valuable feedstock. No established industrial technology for carbon dioxide reforming of methane to synthesis gas exists, in spite of the potentially attractive incentives for a large number of applications. A major problem inhibiting the materialization of this process is catalyst deactivation by carbon deposition via Boudouard reaction

$$(2CO \rightarrow C + CO_2)$$

and/or methane cracking

$$(CH_4 \rightarrow C + 2H_2),$$

which are favourable under reaction conditions [J.T.Richardson and S.A.Paripatyadar, Appl.Catal. 61 (1990) 293; A.T. Ashcroft, A.K.Cheetham, M.C.H.Green, P.D.F. Vernon, Nature 352 (1991) 225; T.Sodesawa, A.Dobashi and F.Nozaki, Reaction Kinetics Catal.Lett. 12 (1979) 107].

During the past decades, the process of carbon dioxide reforming of methane has received attention, and the effort has been focused on development of catalysts which show high activity towards the convertion of $CH_4/CO_2$ to synthesis gas, and are resistant to coking, displaying stable long-term operation. Numerous supported metal catalysts have been tested for the carbon dioxide reforming process. Among them, nickel-based catalysts [T.Sodesawa, A.Dobashi and F.Nozaki, Reaction Kinetics Catal.Lett. 12 (1979) 107; A.M.Gadalla and B.Bower, Chem.Eng.Sci. 43 (1988) 3049; A.M.Gadalla and M.E.Sommer, Chem.Eng.Sci. 44 (1989) 2825] and supported noble metal catalysts (Rh, Ru, Ir, Pd and Pt) [J.T.Richardson and S.A.Paripatyadar, above; A.T.Ashcroft, A.K.Cheetham, M.C.H. Green, P.D.F.Vernon, above; A.Erdohelyi, J.Cserenyi and F.Solymosi, J.Catal. 141 (1993) 287; J.R. Rostrup-Nielsen and J.-H. Bak Hasen, J.Catal. 144 (1993) 38.] give promising catalytic performance in terms of methane conversion and selectivity to synthesis gas. The catalysts based on noble metals are reported to be less sensitive to coking than are the nickel-based catalysts [A.T.Ashcroft, A.K. Cheetham, M.C.H.Green, P.D.F.Vernon, above; L.Basini. M.Marchionna, S.Rossini and D.Sanfilippo, UK Eatent Application No. 2240284 A1]. However, considering the aspects of high cost and limited availability of noble metals, it is more practical and more economical, from the industrial standpoint, to develop an improved nickel-based catalyst which is resistant to carbon deposition, and exhibits stable operation for a long period of time.

Arakawa et al. [T.Arakawa, M.Oka and Fr.Demande, Patents No. FR-2228102, NL-7302403, US-3849087, DE-2308161] used $Ni/\gamma-Al_2O_3$ catalyst to obtain synthesis gas from a mixture of methane, carbon dioxide and water. They found that the catalyst deactivates rapidly by formation of carbon on the catalyst surface, but addition of vanadium (5-10 wt%) to the catalyst can decrease, to a certain extent, the formation of coke. Rapid catalyst deactivation due to strong carbon deposition on supported Ni catalysts was also observed by Chubb [T.A.Chubb, Sol Energy 24 (1980) 341], Velenyi et al. [ L.J.Velenyi, C.Paparizos and F.A. Pesa, European Patent Appl. No. 84273 A2] and Rostrup-Nielsen [J.R. Rostrup-Nielsen, Stud. Surf. Sci. Catal. 36 (1988) 73]. It was claimed that catalyst deactivation is due to coke formation within the pores of the catalyst, which leads to the breakup of the catalyst particles. Carbon dioxide reforming of methane was studied in detail by Gadalla et al. [A.M. Gadalla and B.Bower,above, and A.M. Gadalla and M.E. Sommer, above] over Ni supported on different carriers. They found that no carbon deposition was obtained when reaction temparature as high as 940°C and a $CO_2/CH_4$ ration $\geq 2$ were applied. However, such reaction conditions are not practical for industrial operation. Recently, Yamazaki et al [O. Yamazaki, T. Nozaki, K. Omata and K. Fujimoto, Chem. Lett. (1992) 1953] obtained carbon-free operation of carbon-dioxide reforming of methane at 850°C by adding CaO to Ni/MgO catalyst. However, significant reduction in reaction rate was registered due to the presence of a strong basic component. Also, no data on the selectivity to carbon monoxide and hydrogen were reported.

Increasing reaction temperature (above 700°C) helps to alleviate coke formation on metal surfaces. However, sintering of nickel particles, as well as possible undesirable solid state reactions between nickel and the support material, are expected to become significant as temperature approaches 850°C, which would eventually lead to decrease of catalytic activity. High reaction temperature (>850°C) also results in difficulties in industrial operation. A thermodynamic study of the carbon dioxide reforming of methane reaction reveals that near complete conversion of methane and carbon dioxide, and about 100% selectivity to carbon monoxide and hydrogen (using a feed of $CH_4/CO_2$=1/1, and 1 bar total pressure) are attainable at temperatures in the neighbourhood of 800°C [A.M.Gadalla and B.Bower, above, and A.M.Gadalla and M.E.Sommer, above]. Therefore it is of industrial interest to develop an improved nickel-based catalyst which is capable of producing complete conversion of $CH_4/CO_2$ to synthesis gas at temperatures $\leq$800°C, while displaying stable long-term operation.

## Brief description of the invention

In this invention, a novel nickel-based catalyst which exhibits excellent activity and stability for carbon dioxide reforming of natural gas (methane) to synthesis gas is described. The catalyst consists of nickel in contact with $La_2O_3$ and it could be in the form of nickel supported on $La_2O_3$ carrier or in the form of nickel on $La_2O_3$ particles dispersed on a conventional carrier such as $\gamma-Al_2O_3$. This catalyst can be prepared by any means known to practitioners of this art, including the technique of wet-impregnation of lanthanum oxide with an aqueous solution of a nickel compound (e.g. nickel nitrate). The surface structure of $Ni/La_2O_3$ catalyst experiences a significant alteration upon exposing to $CH_4/CO_2$ mixture at reaction temperatures, as indicated by the observation of significant increase in the reaction rate during the initial 2 - 5 hours of reaction time. After this, the surface composition of the $Ni/La_2O_3$ catalyst reaches equilibrium under the working reaction conditions. The resulting catalyst surface then becomes excellently stable, exhibiting no deactivation during 100 hours of reaction time or more. Conversion of the reactants close to those expected at thermodynamic equilibrium are obtained over this catalyst at a contact time as low as 0.02 seconds (steam reforming of methane reactors over the commercial catalyst typically have superficial contact times of the order of 1 second [M.V. Twigg, ed., Catalyst Handbook, Wolfe, London, 1989]). Upon the application of this novel Ni-based catalyst (i.e. $Ni/La_2O_3$) the materialisation of carbon dioxide reforming of methane to synthesis gas at a larger scale may be practically considered.

## Brief description of the drawings

Figure 1 shows the alteration of the reaction rate as a function of the time on stream over $Ni/La_2O_3$, $Ni/\gamma-Al_2O_3$ and $Ni/CaO$ catalysts under the following reaction conditions: $P_{CH4}$=0.2 bar, $P_{tot}$=1.0 bar, $CH_4/CO_2$=1, T=1023 K, W/F=$2 \times 10^{-3}$ g.s/ml.

Figure 2 shows the alteration of the reaction rate as a function of the time on stream over a 17 wt% $Ni/La_2O_3$ catalyst at reaction temperatures of 550, 650 and 750°C under the following reaction conditions: $P_{CH4}$=0.2 bar, $P_{tot}$=1.0 bar, $CH_4/CO_2$=1, W/F=$2 \times 10^{-3}$ g.s/ml.

Figure 3 shows the alteration of the conversion of $CO_2$ and $CH_4$, and the selectivity to CO and $H_2$ as a function of time on stream over a 17 wt% $Ni/La_2O_3$ catalyst under the following reaction conditions: $P_{CH4}$=0.2 bar, $P_{tot}$=0.1 bar, $CH_4/CO_2$=1, T=1023 K, W/F=$2 \times 10^{-2}$ g.s/ml.

Figure 4 shows the influence of Ni metal loading on the reaction rate and the stability of $Ni/La_2O_3$ catalyst under

the following reaction conditions: $P_{CH4}$=0.2 bar, $P_{tot}$=1.0 bar, $CH_4/CO_2$=1, T=1023 K, W/F=2x10$^{-3}$ g.s/ml.

Figure 5 shows the influence of contact time on the conversion of the reaction over a 17 wt% Ni/La$_2$O$_3$ catalyst. The dotted lines correspond to the values expected at thermodynamic equilibrium. Reaction conditions: $P_{CH4}$=0.2 bar, $P_{tot}$=1.0 bar, $CH_4/CO_2$=1, T=1023 K.

Figure 6 shows the influence of reaction temperature on the conversion of the reaction over a 17 wt% Ni/La$_2$O$_3$ catalyst at a contact time of 0.06 g.s/ml. The dotted lines correspond to those expected at thermodynamic equilibrium. Reaction conditions: $P_{CH4}$=0.2 bar, $P_{tot}$=1.0 bar, $CH_4/CO_2$=1.

Figure 7 shows the effect of treatments on the reaction rate over a 17 wt% Ni/La$_2$O$_3$ catalyst, following the establishment of the stable surface state. The reaction conditions were the following: $P_{CH4}$=0.2 bar, $P_{tot}$=1.0 bar, $CH_4/CO_2$=1, T=1023 K, W/F=2x10$^{-3}$ g.s/ml.

## Detailed description of specific embodiments

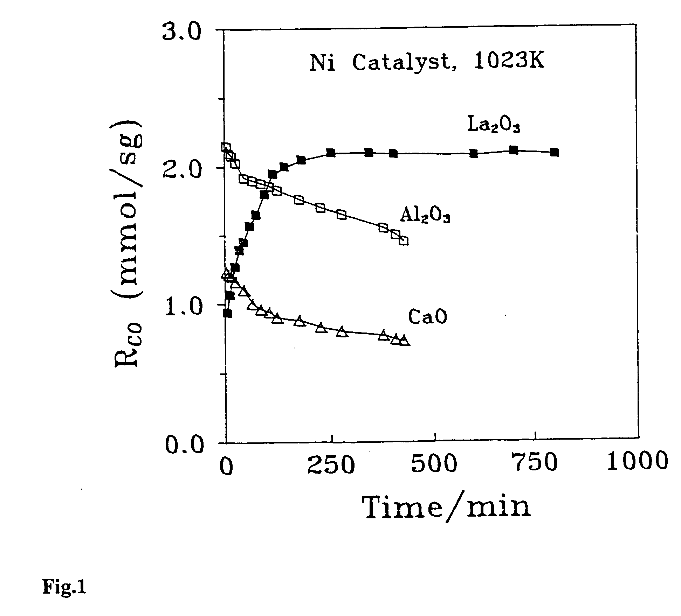

In this invention, a novel nickel-based catalyst exhibiting excellent activity and stability for carbon dioxide reforming of methane to synthesis gas is described. The catalysts were prepared by the wet-impregnation method, using $Ni(NO_3)_2$ as the metal precursor. Identical catalysts can be prepared using other preparation techniques, known to practitioners of this art, and other metal precursors such as nickel oxide, nickel carbonate, nickel chloride, etc. Three different supports were examined: $\gamma$-Al$_2$O$_3$, La$_2$O$_3$ and CaO. It was found in this work, that the nature of the support has a great effect on the activity and stability of the metal catalysts. While Ni catalysts supported on $\gamma$-Al$_2$O$_3$ and CaO deactivate continuously with time on stream, the reaction rate over Ni/La$_2$O$_3$ catalyst increases rapidly with time on stream during the initial 2-5 hours of reaction, and then tends to be excellently stable, invariably with time on stream (see Example 3 and Fig. 1). The value of the stable reaction rate over the Ni/La$_2$O$_3$ catalyst is approximately the same as the initial rate over Ni/$\gamma$-Al$_2$O$_3$, and is significantly higher than that over Ni/CaO catalyst.

The fresh Ni/La$_2$O$_3$ catalyst consists of Ni particles supported on La$_2$O$_3$, as revealed by XRD analysis (see Example 1). Ni crystallites are known to be sensitive to coking which leads to catalyst deactivation due to blocking of the metal sites. However, the reaction rate over Ni/La$_2$O$_3$ catalyst experiences a significant increase upon exposure to the $CH_4/CO_2$ mixture. This implies that the structure of Ni supported on La$_2$O$_3$ undergoes a significant alteration, induced by the working reaction atmosphere, to form a new surface structure, probably with participation of the species from the gaseous phase. Such a new surface structure exhibits excellent activity towards conversion of $CH_4/CO_2$ to synthesis gas and possesses exceptional good resistance to coke formation.

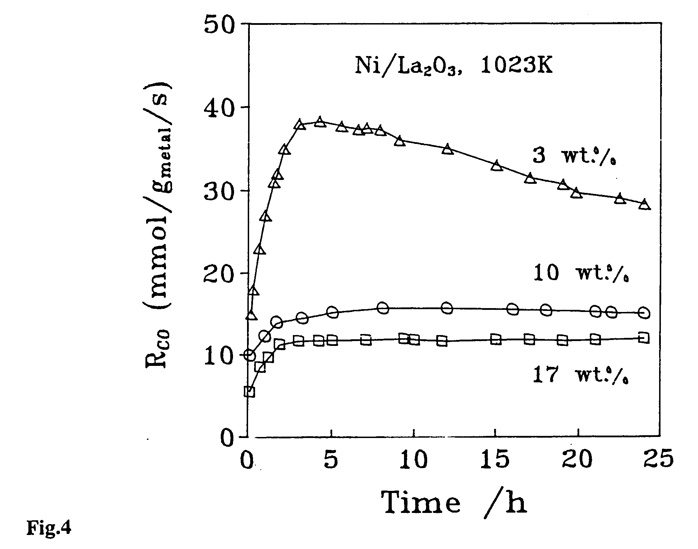

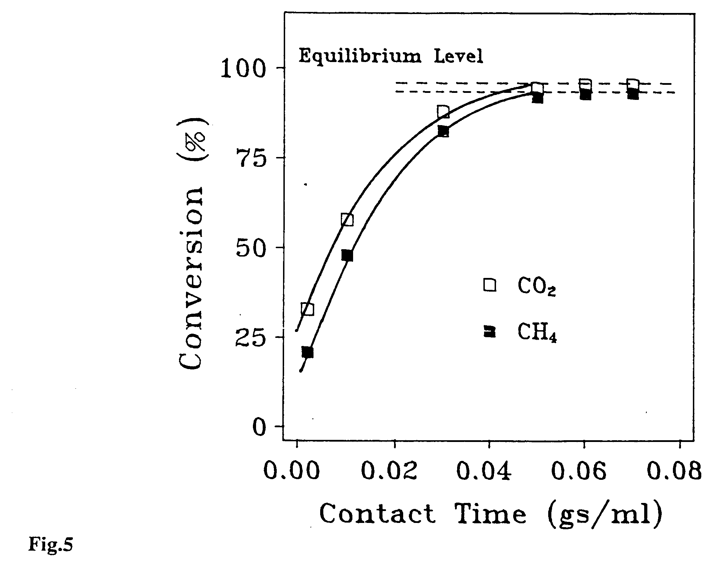

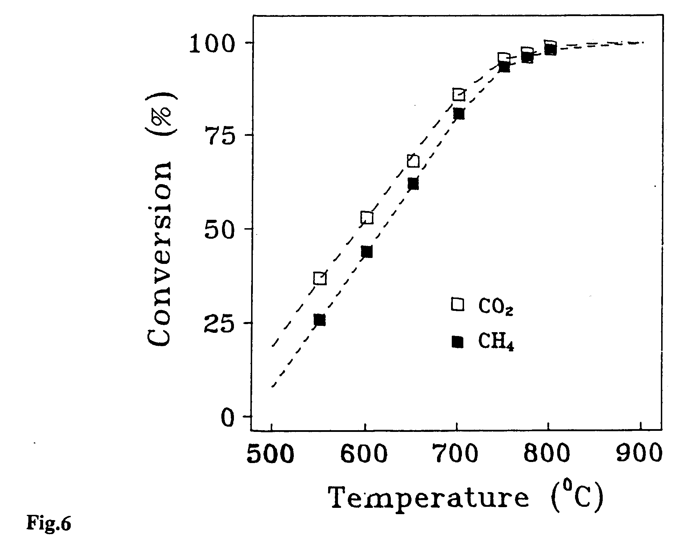

A proper nickel loading on La$_2$O$_3$ support is an important factor affecting its catalytic performance (reaction rate and stability). It is shown (see Example 6, Fig. 4) that the catalyst with a low metal loading exhibits high reaction rate (using units of mmol/g$_{metal}$/S), as compared to the one with higher metal loading. Since the catalyst with low metal loading presumably has higher metal dispersion, it can be derived that the reaction of carbon dioxide reforming of methane favourably proceeds over the surface containing smaller metal particles However, the Ni/La$_2$O$_3$ with low metal loading (e.g. 3 wt%) exhibits catalyst deactivation with time on stream, being inferior to the Ni /La$_2$O$_3$ catalyst with high metal loading (e.g. 10 and 17 wt%) over which no detectable catalyst deactivation is observed. As is also illustrated in Figure 4, it has been found that the catalyst should contain between 0.25 and 20 grams of La$_2$O$_3$ per gram of Ni, preferably between 1 and 9 grams of La$_2$O$_3$ per gram of Ni. By employing a 17 wt% Ni/La$_2$O$_3$ catalyst, conversion and selectivity of the reaction towards CO and H$_2$ close to those expected at thermodynamic equilibrium are achieved at a superficial contact time as low as 0.02 seconds (see Example 7. Fig. 5). Reffering to steam reforming of methane reactors over the commercial catalyst which typically have superficial contact times of the order of 1 second [M.V. Twigg, ed., Catalyst Handbook, Wolfe, London, 1989], the activity of Ni/La$_2$O$_3$ for carbon dioxide reforming of methane is high enough for industrial operation. Complete conversion of methane and carbon dioxide and near 100% selectivity to CO and H$_2$ are obtained when reaction temperature is elevated to the neighbourhood of 800° C (see Example 7, Fig. 6). No deactivation is observed over Ni/La$_2$O$_3$ catalyst in the temperature range of 550 - 800° C over 100 hours of reaction. Upon application of this novel nickel-based catalyst, the reaction of carbon dioxide. reforming of methane to synthesis gas at a larger scale may now be practically considered.

The present invention, i.e. the Ni/La$_2$O$_3$ catalyst, is a new catalyst and the main differences from all the noble metal catalysts and conventional nickel-based catalysts are the following:

1. The catalysts containing noble metals have been reported to be less prone to coking than are nickel-based catalysts [ Richardson and Paripatyadar, above; Ashcroft, Cheetham, Green, Vernon, above; Rostrop-Nielsen and Bak Hasen, above]. However, from the industrial standpoint, the high costs and limited availability of precious metals make noble metal containing catalysts less attractive, as compared to nickel-based catalysts.

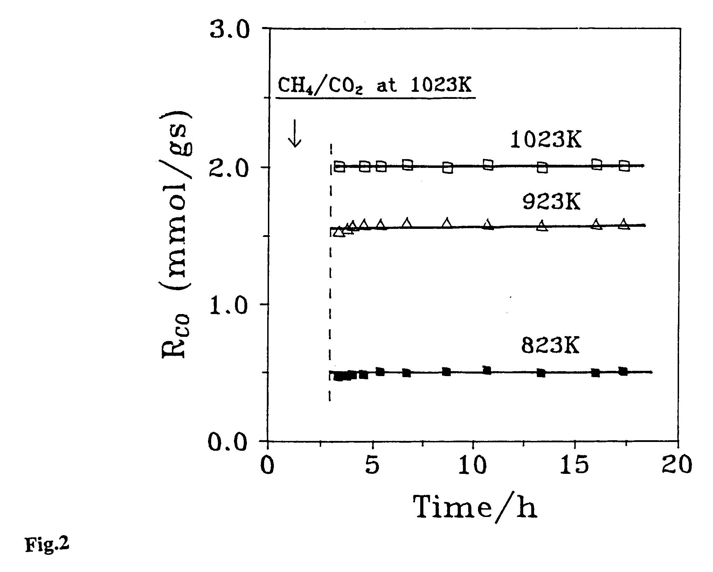

2. Noble metal catalysts still deactivate to some extent, particularly when reaction temperatures lower than 700°C are applied [Richardson and Paripatyadar, above; Ashcroft, Cheetham, Green and Vernon, above]. However, the novel Ni/La$_2$O$_3$ catalyst does not deactivate at all within the temperature range from 550 to 800°C (see Example 4 and Fig. 2).

3. Conventional nickel-based catalysts, e.g. Ni/$\gamma$-Al$_2$O$_3$, Ni/SiO$_2$, Ni/CaO, have been reported to deactivate rapidly with time on stream [Ashcroft,Cheetham,Green and Vernon, above; Sodesawa,Dobashi and Nozaki, above; Chubb, above; Rostrup-Nielsen, Stud.Surf.Sci.Catal.36 (1988) 73]. This tendency was also verified in the present study for Ni/$\gamma$-Al$_2$O$_3$ and Ni/CaO catalysts (see Example 3, Fig. 1). However, no deactivation is observed over the present Ni/La$_2$O$_3$ catalyst. As was already described above, this is due to formation of a new surface structure on Ni/La$_2$O$_3$ catalyst during the first 2 - 5 hours of reaction, which is very different from the Ni crystallites. Also, the reaction rate over this Ni/La$_2$O$_3$catalyst is significantly higher than that over Ni/CaO, and is approximately the same level as the initial reaction rate over Ni/$\gamma$-Al$_2$O$_3$

4. The nickel catalysts tested by Gadalla et al.(Gadalla and Bower, above; and Gadalla and Sommer, above] are supported on $\gamma$-Al$_2$O$_3$, CaO-TiO$_2$-Al$_2$O$_3$, and MgO carriers. Carbon deposition was not observed only when the following reaction conditions were applied: T=940°C and CO$_2$/CH$_4 \geq 2$. Under these conditions carbon deposition on surfaces is thermodynamically inhibited. However, as has already been pointed out, significant catalyst sintering is expected at such a high temperature, which eventually leads to catalyst deactivation. Moreover, such a high reaction temperature, as well as high CO$_2$/CH$_4$ ratios, are undesirable for industrial operation.

5. Using strong basic support or adding steam in the feed gas, or partially sulfiding nickel crystallites have been tried in many other previous studies [e.g. Rostrup-Nielsen, above; O.Yamazaki, T.Nozaki, K.Omata and K.Fujimoto, Chem.Lett.(1992) 1953; and M.F.M.Post, S.T. Sie and E.J.R.Sudhoelter, EP Appl. No. 159759 A2] to alleviate the problem of coking on nickel-based catalysts. However, the consequence is far from satisfactory. Moreover, these approaches usually result in a significant reduction of catalytic activity.

The above discussed differences make the present invention new and innovative.

The following working examples represent a more detailed description of the invention and it is understood that this detailed description is given merely by way of illustration and does not limit the extent of the invention as many variations may be made therein without departing from the spirit of this invention.

## Example 1

This example illustrates the synthesis of nickel catalyst supported on La$_2$O$_3$ carrier.

5g of La$_2$O$_3$ (Alfa products, 99,9%) were impregnated with an aqueous solution containing the desired amount of nickel nitrate (ultrapure, Alfa Products). The water was evaporated under continious stirring and the residue was dried at 110°C for 24 hours. The dried residue was then ground and sieved and was heated at 500°C under N$_2$ flow for 2 hours for complete decomposition of nickel nitrate. After this, the catalyst was reduced at 500°C in H$_2$ flow for at least 5 hours. The nickel metal loading was 3, 10 or 17 wt%.

The Ni/La$_2$O$_3$ catalyst was characterized by XRD. It was shown that the fresh catalyst consists of metallic Ni crystallites supported on La$_2$O$_3$. The nickel dispersion was measured by H$_2$ chemisorption at room temperature. Before the measurement, the sample was further reduced at 750°C in H$_2$ flow for 2 hours. A nickel dispersion of ca. 1% was found for a 17 wt% Ni/La$_2$O$_3$ catalyst.

## Example 2

The reaction rates of carbon dioxide reforming of methane over nickel catalysts supported on La$_2$O$_3$, $\gamma$-Al$_2$O$_3$ and CaO were determined as follows:

The CH$_4$/CO$_2$ reaction was investigated in the temperature range of 550 - 750°C. 10 mg of sample, diluted with 20 mg of $\alpha$-Al$_2$O$_3$, were charged in a fixed-bed quartz reactor. The reaction feed consisted of 20 vol.% CH$_4$, 20 vol.% CO$_2$ and 60 vol.% He. A total flow rate as high as 300 ml/min was used in order to control the reaction conversion to be much lower than those expected at thermodynamic equilibrium (i.e. the reaction is in the kinetic-controlling regime). Fig. 1 shows the alteration of the reaction rate over Ni/$\gamma$-Al$_2$O$_3$, Ni/La$_2$O$_3$ and Ni/CaO catalysts as a function of time on stream. The rate over Ni/La$_2$O$_3$ catalyst increases significantly with time on stream during the initial 2 - 5 hours of reaction, and then tends to be invariable with time on stream, indicating Ni/La$_2$O$_3$ has an excellent stability. The rates over Ni/$\gamma$-Al$_2$O$_3$ and Ni/CaO are reduced continuously with time. Although the initial rate over Ni/$\gamma$-Al$_2$O$_3$ is much higher than the respective one over Ni/CaO, the deactivation rate over $\gamma$-Al$_2$O$_3$ is also faster than that of Ni/CaO.

The following Table 1 gives the reaction rates obtained over nickel catalysts supported on $\gamma$-Al$_2$O$_3$, La$_2$O$_3$ and CaO carriers at 550, 650 and 750°C. Both reaction rates obtained initially and after 5 hours of the reaction are presented. For Ni/La$_2$O$_3$ catalyst, the rate after 5 hours of reaction corresponds to the rate at stable level (see Fig.1). It is shown that the initial reaction rate over Ni/$\gamma$-Al$_2$O$_3$ is higher than the respective ones over Ni/La$_2$O$_3$ and Ni/CaO. However, the reaction rate after 5 hours of reaction over Ni/La$_2$O$_3$ becomes higher than the respective ones over Ni/$\gamma$-Al$_2$O$_3$ and Ni/CaO, indicating Ni/La$_2$O$_3$ is superior to Ni/$\gamma$-Al$_2$O$_3$ and Ni/CaO in term of reaction rate.

Table 1

| Influence of catalyst support on the reaction rate at various temperatures over supported Ni catalyst. | | | | |
|---|---|---|---|---|
| Catalyst 17 wt% Ni/ | State | Reaction Rate (mmol/g.s) | | |
| | | 550°C | 650°C | 750°C |
| $La_2O_3$ | Initial | 0.13 | 0.52 | 0.95 |
| | After 5h | 0.56 | 1.58 | 2.18 |
| $\gamma$-$Al_2O_3$ | Initial | 0.56 | 1.41 | 2.20 |
| | After 5h | 0.23 | 0.79 | 1.48 |
| CaO | Initial | 0.10 | 0.49 | 1.23 |
| | After 5h | - | 0.21 | 0.72 |

*Reaction conditions: $P_{CH4}$=0.2 bar, $P_{tot}$=1.0 bar, $CH_4/CO_2$=1, W/F=$2x10^{-3}$ g.s/ml.

## Example 3

In this example, the stability of a 17 wt% Ni/$La_2O_3$ catalyst was investigated at 550, 650 and 750°C under reaction conditions within which the reaction is kinetically controlled. The Ni/$La_2O_3$ catalyst is first exposed to $CH_4/CO_2$ mixture at 750°C until the reaction rate reaches the stable level (cp. Fig. 1). After this, the reaction rates obtained at 550, 650 and 750°C are monitored as a function of time on stream (Fig. 2). It is shown that, after the above treatment, the resultant Ni/$La_2O_3$ catalyst does not exhibit any deactivation during 20 hours of reaction at 550, 650 and 750°C. These results are of significance since it is known that even supported noble metal catalysts, e.g. Rh catalyst, which has been reported to be the best catalyst for carbon dioxide reforming of methane [Richardson and Paripatyadar, above, and Ashcroft, Cheetham, Green, Vernon, above], still suffers carbon deposition and deactivation at reaction temperatures below 700°C. The absence of catalyst deactivation over Ni/$La_2O_3$ catalyst in a wide temperature range (550 - 750°C) indicates that a new type of nickel compound is formed on the surface, following the exposure of the catalyst to the reaction mixture for 2 to 5 hours.

## Example 4

In this example, the long-term (100 hours of reaction) stability of a 17 wt% Ni/$La_2O_3$ was investigated at 750°C under integral reaction conditions (i.e. high methane conversions). A reaction contact time which keeps the conversions somewhat lower than those expected at thermodynamic equilibrium was used. This allows to study the catalytic performance at high conversions, while catalyst deactivation, if there is any, can also be easily detected.

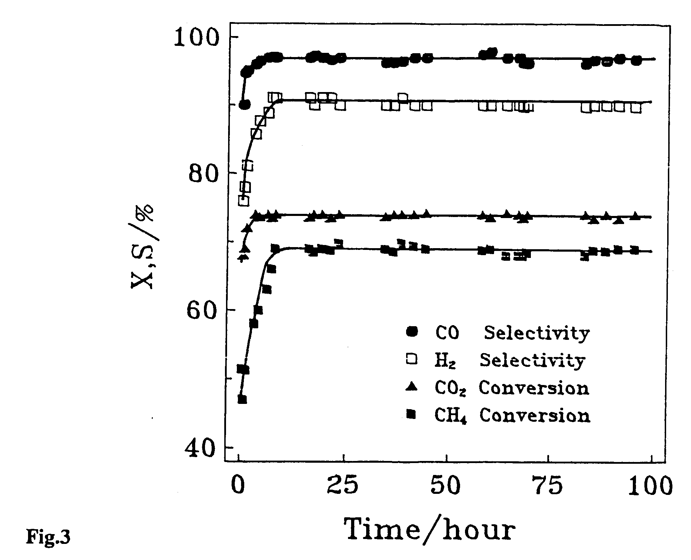

Fig.3 shows the alterations of conversion of methane and carbon dioxide, and selectivity to carbon monoxide and hydrogen as a function of time on stream. Both conversion and selectivity increase rapidly during the initial several hours of reaction. After this, the conversion and selectivity tend to be essentially invariable with time on stream during 100 hours of reaction. The weight of the used catalyst was found to be somewhat larger than that of the fresh one, suggesting that carbon species formed from the gas phase on the used catalyst surface. However, this carbon species must be at steady-state, which does not cause any catalyst deactivation, as is demonstrated in Fig. 3.

## Example 5

This example describes the influence of nickel metal loading on the reaction rate and the stability of Ni/$La_2O_3$ catalyst. Fig.4 shows the influence of metal loading on the reaction rate (using units of mmol/$g_{metal}$/s) and the stability of Ni/$La_2O_3$ catalyst at 1023 K. It is found that the catalyst with a low metal loading exhibits higher reaction rate, as compared to the one with higher metal loading. However, the Ni/$La_2O_3$ with low metal loading (e.g.3 wt%) exhibits catalyst deactivation with time on stream, being inferior to the Ni/$La_2O_3$ catalyst with high metal loading, over which no detectable catalyst deactivation is observed. Note that, although the Ni/$La_2O_3$ catalyst with low metal loading exhibits deactivation, its stability is still superior to those of Ni/$\gamma$-$Al_2O_3$ and Ni/CaO catalysts.

### Example 6

This example describes the effect of contact time on conversion over a 17 wt% $Ni/La_2O_3$ catalyst, and the effect of reaction temperature on conversion obtained at a contact time of 0.06 g.s/ml.

The reaction feed consisted of 20 vol.% $CH_4$, 20 vol.% $CO_2$ and 60 vol.% He. The alteration of contact time was realized by adjusting the amount of catalyst (10 - 50 mg) and the flow rate (25 - 300 mL/min). Fig.5 shows the effect of contact time on conversion over $Ni/La_2O_3$ catalyst at 1023 K. The conversions of methane and carbon dioxide increase rapidly as contact time increases from 0.002 to 0.07 g.s/ml. Conversions approaching those expected at thermodynamic equilibrium (i.e. the dotted lines) are already achieved at a contact time as low as ca. 0.06 g.s/ml, which corresponds to a superficial contact time of ca 0.02 seconds. The conversion obtained at a contact time of 0.06 g.s/ml was also studied at various temperatures (Fig. 6). It is observed that the conversions obtained at various temperatures are already equal to those expected at thermodynamic equilibrium (i.e. the dotted lines) at this contact time. Note that steam reforming of methane reactors over the commercial K-promoted $Ni/\gamma-Al_2O_3$ catalyst typically have superficial contact times of the order of 1 second [M.V.Twigg, Catalyst Handbook, above]. The low contact time (ca. 0.02 seconds) required to obtain the equilibrium conversions of carbon dioxide reforming of methane over $Ni/La_2O_3$ catalyst indicates that the activity of $Ni/La_2O_3$ catalyst is high enough for industrial operation.

### Example 7

In this example, the influence of various pretreatments (before the reaction) and treatments (after the reaction rate reaches the stable level) on the catalytic behaviour of $Ni/La_2O_3$ catalyst is described.

The influence of various pretreatment, i.e. Experiments No. 1-9, on the catalytic performance of $Ni/La_2O_3$ catalyst is shown in the following Table 2.

Table 2

| Influence of pretreatment of 17 wt% $Ni/La_2O_3$ on the reaction rates at initial and stable levels. | | | |
|---|---|---|---|
| Experiment No. | Pretreatments | Rate for CO formation (mmol/g.s) | |
| | | Initial | Stable |
| 1. | No treatment | 0.13 | 1.91 |
| 2. | $CO_2$, 1023 K,2h | 0.07 | 1.44 |
| 3. | $O_2$, 1023 K,2h | 0.34 | 1.76 |
| 4. | $CH_4$, 1023 K, 1h | 1.23 | 1.42 |
| 5. | $H_2$, 1023 K, 2h | 0.94 | 2.10 |
| 6. | $H_2$, 1023 K, 5h | 1.10 | 1.90 |
| 7. | $H_2$, 1023 K, 12h | 0.67 | 2.00 |
| 8. | Air. 1123 K 10h | 0.19 | 1.71 |
| 9. | Air, 1123 K, 10h then $H_2$, 1023 K, 2h | 0.40 | 1.60 |

*Reaction conditions: $P_{CH4}$=0.2 bar, $P_{tot}$=1.0 bar, $CH_4/CO_2$=1, $W/F=2x10^{-3}$ g.s/ml.

It is noted that regardless of what kind of pretreatment is applied, the initial reaction rate is always lower than the reaction rate at the stable level. Although the pretreatment affects the initial rate to a significant extend, it does not influence significantly the reaction rate at the stable level. These results imply that there exists a strong tendency for $Ni/L_{a2}O_3$ catalyst to form a stable surface structure under the working reaction conditions. It can also be derived that none of these pretreatments (see Table 2) resulted in an initial surface state which is similar to the stable surface state. Specifically, the results from Experiments No. 2, 5, 6, 7 suggest that the stable surface state of $Ni/La_2O_3$ is very different from metallic Ni or NiO supported on $La_2O_3$. The pretreatments of Experiments No. 8 and 9 are expected to facilitate the solid reaction between $La_2O_3$ and NiO, which presumably leads to formation of $LaNiO_3$ and/or $La_2NiO_4$ to a larger extent [J.L.G. Fierro, J.M.D. Tascon and L.G. Tejuca, J.Catal. 93 (1985) 83; N.Gunasekaran, A. Meenakshisundaram and V.Srinivasan, Indian J.Chem., Sect.A.21 (1982) 346]. The results indicate that neither the formation of $LaNiO_3$ nor

$La_2NiO_4$ can account for the stable surface state. It appears that the stable surface structure consists of a mixture of several components involving nickel (and/or nickel oxide), lanthanum oxide, as well as the species from the gaseous phase, which are in "equilibrium" under the working reaction conditions.

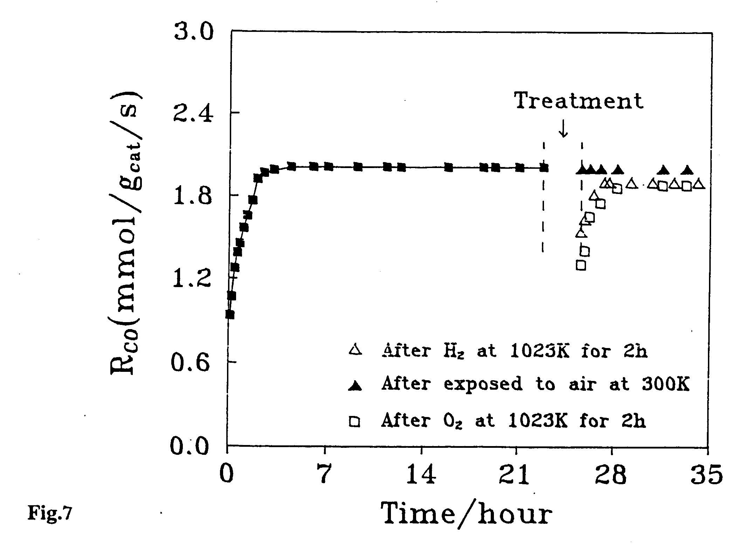

Fig 7 shows the influence of several treatments on the reaction rate over $Ni/La_2O_3$ catalyst, following the establishment of the stable surface state. It is interesting to note that the stable surface structure is insensitive to exposure to air at room temperature, whereas a treatment at the reaction temperature in $H_2$ or $O_2$ flow alter or destroy the stable surface structure. However, it is shown that the stable surface structure is essentially retrievable after re-exposing the catalyst to the reaction mixture at the reaction temperature. This observation reveals that the catalyst can be easily regenerated, by exposure to $H_2$ or air, if it is deactivated.

## Literature Cited

1. D.L.Trimm, Catal.Rev.Sci.Eng. 16 (1977) 155.
2. J.T.Richardson and S.A.Paripatyadar, Appl.Catal. 61 (1990) 293.
3. A.T.Ashcroft, A.K.Cheetham, M.C.H.Green, P.D.F.Vernon, Nature 352 (1991) 225.
4. T.Sodesawa, A.Dobashi and F.Nozaki, Reaction Kinetics Catal.Lett. 12 (1979) 107.
5. A.M.Gadalla and B.Bower, Chem.Eng.Sci. 43 (1988) 3049.
6. A.M.Gadalla and M.E.Sommer, Chem.Eng.Sci.44 (1989) 2825.
7. A.Erdohelyi, J.Cserenyi and F.Solymosi, J.Catal. 141 (1993) 287.
8. J.R.Rostrup-Nielsen and J.-H.Bak Hasen, J.Catal. 144 (1993) 38.
9. L.Basini,M.Marchionna, S.Rossini and D.Sanfilippo, U.K. Patent Appl.No. 2240284 A1.
10. T.Arakawa, M.Oka and Fr.Demande, FR Patent No.2228102; NL Patent No.7302403; US Patent No.3849087; DE Patent No.2308161.
11. T.A.Chubb, Sol.Energy 24 (1980) 341.
12. L.J.Velenyi, C.Paparizos and F.A.Pesa, EP Appl.No.84273 A2
13. J.R.Rostrup-Nielsen, Stud.Surf.Sci.Catal. 36 (1988) 73.
14. O.Yamazaki, T.Nozaki, K.Omata and K.Fujimoto, Chem.Lett. (1992) 1953.
15. M.V.Twigg, ed., Catalyst Handbook, Wolfe, London, 1989.
16. M.F.M.Post, S.T.Sie and E.J.R.Sudhoelter, EP Appl.No. 159759 A2.
17. J.L.G.Fierro, J.M.D.Tascon and L.G.Tejuca, J.Catal. 93 (1985) 83.
18. N.Gunasekaran, A.Meenakshisundaram and V.Srinivasan, Indian J.Chem., Sect.A.21 (1982) 346.

## Claims

1. A nickel-based catalyst with activity and stability for carbon dioxide reforming of natural gas (methane) to synthesis gas, consisting of nickel in contact with $La_2O_3$ either in the form of nickel supported on $La_2O_3$ carrier or in the form of nickel on $La_2O_3$ particles dispersed on a conventional carrier such as $\gamma$-$Al_2O_3$, e.g. by techniques of wet-impregnation or others, containing between 0.25 and 20 grams of $La_2O_3$ per gram of Ni, preferably between 1 and 9 grams of $La_2O_3$ per gram of Ni, characterized in that a new surface structure is formed during the initial 2-5 hours of reaction time during which period a significant increase in reaction rate is performed, after which the new surface composition and structure of the new $Ni/La_2O_3$ catalyst becomes stable exhibiting no deactivation over long term reaction in the temperature range of 550 - 800°C by showing resistance to coke formation, achieving near complete conversion of methane and carbon dioxide, and around 100% selectivity to carbon monoxide and hydrogen at about 800°C and superficial contact time of ca. 0.02 seconds.

2. A catalyst in accordance with claim 1, consisting of Ni in contact with $La_2O_3$.

3. A catalyst as in claim 1, where nickel nitrate is used as nickel metal precursor.

4. A catalyst as in claim 1 where other nickel compound, e.q. nickel oxide, nickel carbonate, nickel chloride, etc., is used as nickel metal precursor.

5. A catalyst as in claims 1-4, where $La_2O_3$ is used as a support.

6. A catalyst as in claims 1 - 5, where the lanthanum compound other than lanthanum oxide, e.g. lanthanum nitrate, lanthanum hydroxide, lanthanum carbonate, etc., is used as the $La_2O_3$ precursor.

# EP 0 692 451 B1

7. A catalyst for carbon dioxide reforming of natural gas (methane) to synthesis gas, in accordance with any one of claims 1-6, containing more than one of the following compounds: Ni, NiO, $La_2O_3$, $La_2O_2CO_3$, $La_2(CO_3)_3$, $NiCO_3$, $NiLa_2O_4$, $LaNi_5$, $LaNiO_3$, $La_2NiO_4$, all of which are possibly formed from $Ni/La_2O_3$ pairs under working reaction conditions.

8. A catalyst as in claims 1 - 7, where the active nickel compound resulted from the interaction between species in the gas phase under working conditions and nickel metal and/or nickel oxide, e.g. nickel carbide, is additionally present.

9. A catalyst as in claim 1 - 8, where the lanthanum compound resulted from the interaction between species in gas phase under working conditions and lanthanum oxide is additionally present.

10. A method for the preparation of the catalysts claimed in claims 1 - 9, consisting of wet-impregnation technique which results in the catalyst containing nickel crystallites and $La_2O_3$, characterized in that $La_2O_3$ is impregnated with an aqueous solution containing the desired amount of nickel nitrate, evaporating the water, drying, grounding, sieving and heating under $N_2$ flow until complete decomposition of nickel nitrate and reducing the catalyst at 500°C in $H_2$ flow for at least 5 hours and at 750°C in $H_2$ flow for 2 hours, thus achieving a ca. 1% dispersion for a 17 wt% $Ni/La_2O_3$ catalyst.

11. The use of the catalysts in accordance with claims 1 - 9, in a reaction consisting of carbon dioxide reforming of hydrocarbon(s) other than methane (e.g. low alkane hydro-carbons, aromatic hydrocarbons) to synthesis gas and other products.

12. The use of the catalysts according to claims 1-9 in reactions using the catalysts according to claims 1-9, consisting of steam reforming of natural gas (methane) to synthesis gas.

13. The use of the catalysts according to claims 1-9 in reactions using these catalysts consisting of partial oxidation of methane to synthesis gas.

14. The use of the catalyst according to claims 1-9 and 11-13 in any type of reactor which is employed industrially for said processes, e.g. fixed bed reactor, fluid bed reactor, monolythic-type reactor, etc. for carbon dioxide reforming of methane and/or natural gas or hydrocarbons to synthesis gas or other products.

**Patentansprüche**

1. Ein Katalysator auf der Basis von Nickel mit Aktivität und Stabilität zur Kohlendioxid-Reformation von Naturgas (Methan) zu Synthesegas, bestehend aus Nickel in Kontakt mit $La_2O_3$ entweder in Form von Nickel gestützt auf einem $La_2O_3$-Träger oder in Form von Nickel auf $La_2O_3$-Partikel, welche verteilt sind auf einem konventionellen Träger wie γ-$Al_2O_3$, z.B. durch Naßimprägnierungs- oder andere Techniken, zwischen 0,25 und 20 Gramm $La_2O_3$ pro Gramm Ni beinhaltend, vorzugsweise zwischen 1 und 9 Gramm $La_2O_3$ pro Gramm Ni, dadurch charakterisiert, daß während der anfänglichen 2-5 Stunden Reaktionszeit eine neue Oberflächenstuktur gebildet wird, während welcher Periode eine wesentliche Zunahme der Reaktionsrate eintritt, wonach die neue Oberflächenkomposition und Struktur des neuen $Ni/La_2O_3$ Katalysators stabil wird, ohne Deaktivierung aufzuweisen bei langzeitiger Reaktion im Temperaturbereich von 550-800° C, indem er Resistenz zeigt gegen Bildung von Kohleablagerung, eine beinahe komplette Konversion von Methan und Kohlendioxid und ca. 100% Selektivität zu Kohlenmonoxid und Wasserstoff erreichend bei ca. 800° C und Oberflächen-Kontaktzeit von ca. 0,02 Sekunden.

2. Ein Katalysator gemäß Anspruch 1, bestehend aus Ni in Kontakt mit $La_2O_3$.

3. Ein Katalysator wie in Anspruch 1, worin Nickelnitrat als Nickelmetallvorläufer benutzt wird.

4. Ein Katalysator wie in Anspruch 1, worin eine andere Nickelverbindung, z.B. Nickeloxid, Nickelkarbonat, Nickelchlorid usw., als Nickelmetallvorläufer benutzt wird.

5. Ein Katalysator wie in Ansprüchen 1-4, worin $La_2O_3$ als Stütze benutzt wird.

6. Ein Katalysator wie in Ansprüchen 1-5, worin eine andere Lanthanumverbindung als Lanthanumoxid, z.B. Lanthanumnitrat, Lanthanumhydroxid, Lanthanumkarbonat usw., als $La_2O_3$ Vorläufer benutzt wird.

**7.** Ein Katalysator zur Kohlendioxid- Reformation von Naturgas (Methan) zu Synthesegas, gemäß einem der Ansprüche 1-6, mehr als eine der folgenden Verbindungen beinhaltend: Ni, NiO, $La_2O_3$, $La_2O_2CO_3$, $La_2(CO_3)_3$, $NiCO_3$, $NiLa_2O_4$, $LaNi_5$, $LaNiO_3$, $La_2NiO_4$, welche alle möglicherweise von $Ni/La_2O_3$ Paaren unter Arbeitsreaktionsbedingungen gebildet werden.

**8.** Ein Katalysator wie in Ansprüchen 1-7, worin die aktive Nickelverbindung, welche aus der Wechselwirkung von Arten in der Gasphase unter Arbeitsbedingungen und Nickelmetall und/oder Nickeloxid, z.B. Nickelkarbid resultierte, zusätzlich vorhanden ist.

**9.** Ein Katalysator wie in Ansprüchen 1-8, worin die Lanthanumverbindung aus der Wechselwirkung von Arten in der Gasphase unter Arbeitsbedingungen und Lanthanumoxid resultierte, zusätzlich vorhanden ist.

**10.** Eine Methode zur Herstellung der Katalysatoren aus den Ansprüchen 1-9, bestehend aus Naßimprägnierungstechnik, die zum Katalysator führt, der Nickelkrystallite und $La_2O_3$ beinhaltet, dadurch charakterisiert, daß $La_2O_3$ mit einer wässerigen Lösung, die die gewünschte Menge Nickelnitrat enthält, impregniert wird, das Wasser verdampft, der Katalysator getrocknet, gemahlen, gesiebt und erhitzt wird unter $N_2$ Fluß bis zur vollständigen Dekomposition des Nickelnitrats und reduziert wird bei 500° C in $H_2$ Fluß für mindestens 5 Stunden und bei 750° C in $H_2$ Fluß für 2 Stunden, so eine ca. 1% Dispersion erreichend für einen 17 % (Gewicht) $Ni/La_2O_3$ Katalysator.

**11.** Die Benutzung der Katalysatoren gemäß den Ansprüchen 1-9 in einer Reaktion bestehend aus Kohlendioxid-Reformation von Kohlenwasserstoff(en), anderen als Methan (z.B. niedere Alkan-Kohlenwasserstoffe, aromatische Kohlenwasserstoffe) zu Synthesegas und anderen Produkten.

**12.** Die Benutzung der Katalysatoren gemäß den Ansprüchen 1-9 in Reaktionen, die die Katalysatoren gemäß den Ansprüchen 1-9 benutzen, bestehend aus Dampf-Reformation von Naturgas (Methan) zu Synthesegas.

**13.** Die Benutzung der Katalysatoren gemäß den Ansprüchen 1-9 in Reaktionen, die diese Katalysatoren benutzen, bestehend aus teilweiser Oxidation von Methan zu Synthesegas.

**14.** Die Benutzung der Katalysatoren aus den Ansprüchen 1-9 und 11-13 in jeder Art von Reaktor, der industriell für die angeführten Verfahren benutzt wird, z.B. Festbettreaktor, Flüssig-Bett-Reaktor, Reaktor monolithischen Typs usw., zur Kohlendioxid-Reformation von Methan und/oder Naturgas oder Kohlenwasserstoffen zu Synthesegas oder anderen Produkten.

**Revendications**

**1.** Un catalyseur basé à nickel avec activité et stabilité pour reformer le gaz naturel (méthane) avec dioxyde de carbone en gaz de synthèse, composé de nickel en contact avec $La_2O_3$, en forme de nickel supporté sur porteur de $La_2O_3$ ou en forme de nickel sur particules de $La_2O_3$ dispersés sur un porteur conventionnel comme $\gamma$-$Al_2O_3$, par exemple par techniques d' imprégnation humide ou autres, contenant entre 0.25 et 20 grammes de $La_2O_3$ par gramme de Ni, de préférence entre 1 et 9 grammes de $La_2O_3$ par gramme de Ni, caractérisé par la formation d' une nouvelle structure superficielle pendant les premières 2-5 heures du temps de la réaction; pendant cette période il y a une augmentation importante de la vitesse de la réaction, après la quelle la nouvelle composition et structure superficielle du nouveau catalyseur $Ni/La_2O_3$ devient stable sans montrant de déactivation pour un long temps de réaction quand la température est entre 550-800°C par montrant de la résistance à la formation de coke, en réussissant presque complète conversion de méthane et de dioxyde de carbone, et sélectivité environ 100% en monoxyde de carbone et hydrogène, à température environ 800°C et temps de contact superficiel environ 0,02 secondes.

**2.** Un catalyseur conformément à la prétention 1, composé de Ni en contact avec $La_2O_3$.

**3.** Un catalyseur suivant la prétention 1, où nitrate de nickel est employé comme précurseur du métal nickel.

**4.** Un catalyseur suivant la prétention 1, où un autre composé de nickel, par exemple oxyde de nickel, carbonate de nickel, chlorure de nickel, etc., est employé comme précurseur du métal nickel.

**5.** Un catalyseur suivant les prétentions 1-4, où $La_2O_3$ est employé comme support.

6. Un catalyseur suivant les prétentions 1-5, où le composé de lanthane est different d' oxyde de lanthane, par exemple nitrate de lanthane, hydroxyde de lanthane, carbonate de lanthane, etc., et est employé comme précurseur de $La_2O_3$.

7. Un catalyseur pour reformer le gaz naturel (méthane) avec dioxyde de carbone en gaz de synthèse, conformément à une des prétentions 1-6, contenant plus d'un des composés suivants: Ni, NiO, $La_2O_3$, $La_2O_2CO_3$, $La_2(CO_3)_3$, $NiCO_3$, $NiLa_2O_4$, $LaNi_5$, $LaNiO_3$, $La_2NiO_4$; tous peuvent être formés par paires $Ni/La_2O_3$ dans les conditions de réaction de travail.

8. Un catalyseur suivant les prétentions 1-7, où le composé actif de nickel résulte de l'interaction entre espèces en phase gazeuse dans les conditions de travail et en plus, métal nickel et/ou oxyde de nickel, par exemple carbure de nickel, est présent.

9. Un catalyseur suivant les prétentions 1-8, où le composé de lanthane résulte de l'interaction entre espèces en phase gazeuse dans les conditions de travail et en plus, oxyde de lanthane est présent.

10. Une méthode pour la préparation des catalyseurs prétendus dans les prétentions 1-9, consistée à la technique d'imprégnation humide qui résulte au catalyseur qui contient des cristallites de nickel et $La_2O_3$, caractérisé par l' imprégnation de $La_2O_3$ avec une solution aqueuse contenant la quantité désirée de nitrate de nickel, l'évaporation de l'eau, le séchage, la mouture, le tamisage et le chauffage sous le flux de $N_2$ jusqu'à la décomposition complète de nitrate de nickel et réduction du catalyseur à 500°C sous flux de $H_2$ pour 5 heures au moins, et à 750°C sous flux de $H_2$ pour 2 heures, réussissant ainsi une dispersion environ 1% pour un catalyseur $Ni/La_2O_3$ 17% au poids.

11. L' emploi des catalyseurs suivant les prétentions 1-9 à une réaction consistée au reformage de(s) hydrocarbure(s) différent(s) de méthane (par exemple, hydrocarbures saturés légers, hydrocarbures aromatiques), avec dioxyde de carbone, en gaz de synthèse et autres produits.

12. L' emploi des catalyseurs suivant les prétentions 1-9 aux réactions qui emploient les catalyseurs suivant les prétentions 1-9, consistées au reformage à la vapeur de gaz naturel (méthane) en gaz de synthèse.

13. L' emploi des catalyseurs suivant les prétentions 1-9 aux réactions utilisant ces catalyseurs, consistées à l' oxydation partielle du méthane en gaz de synthèse.

14. L' emploi des catalyseurs suivant les prétentions 1-9 et 11-13 dans quelconque réacteur qui est employé industriellement pour les procédés en question, par exemple réacteur à lit fixe, réacteur à lit fluide, réacteur de type monolithique, etc. pour reformer le méthane et/ou le gaz naturel ou autres hydrocarbures, avec dioxyde de carbone, en gaz de synthèse ou autres produits.

Fig.1

Fig.2

EP 0 692 451 B1

Fig.3

Fig.4

EP 0 692 451 B1

Fig.5

Fig.6

EP 0 692 451 B1